# EUROPEAN PATENT APPLICATION

(11) **EP 4 687 237 A1**
(43) Date of publication of application: **04.02.2026**
(21) Application number: 24191902.6
(22) Date of filing: 30.07.2024
(51) Int. Cl.: H02G 1/12

(54) **CABLE PROCESSING MACHINE AND METHOD FOR CALIBRATING SUCH A MACHINE**

(71) Applicant: Schleuniger AG, 3608 Thun (CH)
(72) Inventor: ADDARIO, Ivan, 3604 Thun (CH); WIDMER, Thomas, 3604 Thun (CH); ZEMP, Benno, 3604 Thun (CH)
(74) Representative: PPR AG

(57) **Abstract**

The invention provides a cable processing machine (1), for processing an electrical cable (10), comprising a blade unit (100) comprising a first blade pair (110) with an upper blade (111) and a lower blade (112) for processing the electrical cable. The cable processing machine further comprises a position determination unit (200, 300), for instance associated with the upper blade (111). The blade unit (100) comprises a first reference element (150) arranged to allow the position determination unit to determine a reference position of the upper blade (111), such as a two-dimensional (2D) reference position. Advantageously, the first reference element is shaped such that, when the blade unit (and thereby the first blade pair) is repositioned in a X-direction and/or a Y-direction, it triggers the position determination unit. The trigger is indicative for a X-reference position, respectively a Y-reference position, of the blade unit, and hence of the first blade pair, or at least of the upper blade. Preferably, the position determination unit comprises a light barrier having a light source and a light sensor between which a light ray is exchanged/send. Alternatively, the position determination unit comprises an image sensor.

## Description

This invention relates to a cable processing machine for processing an electrical cable or wire according to the pre-amble of claim 1. The invention furthermore relates to a method for calibrating such a machine. Moreover, the invention relates to an upgrade-kit for upgrading a cable processing machine to allow performing the calibration method.

Cable processing machines, such as cut-and-strip machines, are widely used for the production of cable or wire pieces with for instance specified length and with cable ends prepared for connection to, for instance, male or female connectors. The electrical cable may be a single core cable, comprising a central conductor surrounded by a sheath providing electrical and mechanical protection. Alternatively, it may be a multi-core cable, or even a coaxial cable. Such cut-and strip cable processing machines may have a single pair of knives or blades, two pairs of knives, or even more pairs (three or four) next to each other on an actuation member of a knife drive. For instance, in case of a two pair combination, a first knife pair (V-blades) is arranged to cut or severe a cable for creating a cable end to be processed. A second knife pair (shaped blades, usually including a central semi-circle cutting blade portion flanked by two bevel portions for centring the cable) is arranged to cut-and-strip the insulation from the cable end to be processed. To this end, the knife drive can displace the actuation member in an X-direction so that, when the electrical cable is fixedly held with its length axis along a Z-direction, either the first or the second knife pair can be brought into an engagement position for cutting, respectively stripping of the cable / cable end. The actuation members or blade holders, and hence the knifes (usually an upper knife and a lower knife) of a pair are displaced in the Y-direction upon engaging the electrical cable for their cable processing action (such as cutting and stripping).

It is not untypical that cable producers will have several cut-and strip machines of the same or similar model working in parallel. All these machines typically intend to produce a pre-specified cable piece simultaneously, all fulfilling the same quality specifications. In order to accomplish this objective, the producers typically store the appropriate production parameters in so-called recipes associated with the pre-specified cable piece to be produced. The recipes include, for instance, cable type, cable diameter, cable length to be produced, strip-length, knife form factors appropriate for the cable type, knife stroke length, cutting depth into the insulation, *etc.* The recipes may be deliverable from a central control to each of the cable processing machines through a bus infrastructure. Alternatively, the recipe data may be transferred to the individual machines wirelessly, or through mobile storage devices such as USB-sticks and the like.

One of the key parameters in the production of high-quality electrical cables is the cutting depth of the knives into the insulation of the cables, respectively the stroke length of the blades. If the cutting depth is too small, the insulation will not sever and the stripping of the insulation at a cable end will be unsuccessful. If the cutting depth is too large, the blades will damage the inner lying metal strands of the shielding mesh or conductor.

Due to mechanical tolerances, however, the position the actuation members and blades of each of the cable processing machines working in parallel may vary. It is not uncommon that variations of 0.2 mm or more in both the X and Y direction occur from one machine to the next. Given the recipes provided to a cable processing machine and the stroke length of the blades provided in the recipes, such position tolerances will result in large inter machine quality variations when several machines of the same type or model are operated in parallel. It is therefore standard practice that these tolerance related deviations are corrected manually by highly specialised personnel with a correction- and adjustment process. This process is first performed during final assembly of the cable processing machine at the machine manufacturer premises. It may be followed-up in the field on site upon installation at the cable producers' facilities. And of course, as a corrective action upon detection of faulty production of the pre-specified cable pieces. The end result of the manual operation is that a reference position (or "zero-point") relative the Y-direction of the knife pairs is determined and stored as part of the recipe for a particular cable processing machine.

As a first example of a typical manual process, the operator may determine the reference position of a knife/blade pair relative to the Y-axis by looking at the knives as they are closed towards the cable axis on the Z-axis, while a light source is illuminating the knives from an opposing side. As the operator's eye detects the disappearance of light upon the knives approaching each other, the reference position is determined. In a second example for determining the reference position of the knives, a very thin wire (typically AWG30) is inserted by hand. As the knives are closed and a cut is detected by an electrical short circuit measurement, a "zero-point" is assigned to the Y-axis.

Upon changing the knifes, for instance because other pre-specified cable pieces of a different cable type are to be produced, the manual adjustment process will need to be repeated. A first disadvantage is that these manual adjustments are time consuming. Another disadvantage is that the manual adjustment process is highly dependent on the technical capabilities of the operator. Hence, cable piece manufactures are confronted with large inter-operator induced variabilities of the production quality. Moreover, while producers could choose to omit repeated manual adjustment processes during a production day as change overs between cable types occur, in order to safe machine down-time, such omissions will be detrimental to production quality.

The invention intends to alleviate at least one of the above-mentioned drawbacks of the prior art. The invention proposes a cable processing machine enabling superior and consistent quality production of cable pieces. Moreover, the proposed cable processing machine allows shorter set-up change over times. By allowing performing an automated calibration procedure, the proposed cable processing machine avoids large inter-operator induced variabilities of the production quality to which existing machines are prone. Furthermore, by avoiding cutting test wires for determining the reference position / zero-point (and hence a stroke length to realise a targeted cutting depth for a given cable type with specified insulation thickness), waist and machine down-time are reduced, respectively minimized.

The objective of the invention is solved by the features of the independent claims. Advantageous further developments are shown in the figures and in the dependent claims.

According to an aspect of the invention, a cable processing machine for processing an (electrical) cable is provided, the cable processing machine comprising (i) a blade unit comprising a first blade pair with an upper blade and a lower blade for processing the electrical cable; and (ii) a position determination unit. The blade unit comprises a first reference element arranged to allow the position determination unit to determine a reference position of the upper and/or the lower blade, for instance a two-dimensional (2D) reference position. Advantageously, the first reference element is shaped such that it forms a relative reference position detectable by the position determination unit. The position determination unit advantageously is further arranged to determine the position of the upper and/or lower blade relative to this reference position.

In an embodiment of the cable processing machine, the position determination unit comprises a first light barrier associated with the upper blade, and the first reference element is arranged to allow the first light barrier to determine a two-dimensional (2D) reference position of the upper blade. Advantageously, the (first) light barrier comprises a light source and a light sensor, the former emitting a light ray which is detected by the later. The light source may emit visible light or infrared light. Moreover, the light source may emit coherent light (e.g. a diode laser) or incoherent light. The first reference element is shaped such that, when the blade unit (and thereby the first blade pair) is repositioned in a X-direction and/or a Y-direction, it triggers the first light barrier by intercepting the light ray between the light source and the light sensor of the light barrier. The trigger is indicative for a X-reference position, respectively a Y-reference position, of the blade unit, and hence of the first blade pair, or at least of the upper blade.

In an embodiment of the cable processing machine, the blade unit comprises a second reference element arranged to allow the position determination unit to determine a 2D reference position of the lower blade. Advantageously, the second reference element is shaped such that it forms a relative reference position detectable by the position determination unit. The position determination unit advantageously is further arranged to determine the position of the lower blade relative to this reference position.

In an embodiment of the cable processing machine, the position determination unit comprises a second light barrier associated with the lower blade, and the second reference element is arranged to allow the second light barrier to determine a 2D reference position of the lower blade. Advantageously, the second reference element is shaped such that, when the blade unit (and thereby the first blade pair) is repositioned in a X-direction and/or a Y-direction, it triggers the second light barrier by intercepting the light ray between the light source and the light sensor of the second light barrier. The trigger is indicative for a X-reference position, respectively a Y-reference position, of the blade unit, and hence of the first blade pair, or at least of the lower blade.

In an embodiment of the cable processing machine, the first respectively the second reference element comprises a first reference edge for determining a reference position in a X-direction, and a second reference edge for determining a reference position in a Y-direction. Preferably the first reference edge and the second reference edge are arranged at 90° relative to each other. Advantageously, the first and second reference edges allow determining the 2D reference position (X-direction and Y-direction) of the blade unit, respectively of the upper and lower blades by the position determination unit. Advantageously, by intercepting light, such as the light ray between light source and light sensor of a light barrier upon repositioning the blade unit, the first and second reference edges allow determining the 2D reference position of the blade unit, respectively of the upper and lower blades. Preferably, the first and second light barriers are arranged such that their light rays are at right angles to the X-direction and Y-direction. This allows a particular accurate determination of the 2D reference position.

In an embodiment of the cable processing machine, the blade unit comprises an upper blade arm. The upper blade is fixed on the upper blade arm and the first reference element is arranged on the upper blade arm. Alternatively, the upper blade is positioned in an upper blade holder and the first reference element is arranged either on the upper blade arm or on the upper blade holder. Furthermore, the blade unit may comprise a lower blade arm. The lower blade is fixed on the lower blade arm, and the second reference element is arranged on the lower blade arm. Alternatively, the lower blade is positioned in a lower blade holder, and the second reference element is arranged either on the lower blade arm or on the lower blade holder.

In an embodiment of the cable processing machine, the first light barrier, respectively the second light barrier have a light source (such as a laser or a diode) and a light sensor (such as a photodiode, photoresistor, phototransistor, or photovoltaic light sensor).

In an embodiment of the cable processing machine, the light source of the first light barrier is positioned opposite a front side of the associated upper blade, and the light sensor of the first light barrier is positioned opposite a back side of the associated upper blade.

In an embodiment of the cable processing machine, wherein the light source and the light sensor of the first light barrier are positioned opposite a front side of the associated upper blade. The light source and light sensor could be integrated in a single unit. The first light barrier may further comprise a reflecting element, wherein the reflecting element is positioned opposite a back side of the associated upper blade.

In an embodiment of the cable processing machine, the position determination unit comprises an image sensor, such as a 1D or 2D image sensor. Advantageously, a 2D image sensor comprises a pixel array allows capturing a vision field including the first reference element and the upper blade. The position (and orientation) of the upper blade relative to the reference element can be directly determined from the measured light data by the pixel array of the 2D image sensor. Preferably the 2D image sensor is a CCD camera.

In an embodiment of the cable processing machine, the upper blade or the lower blade comprises an identification element for allowing the associated position determination unit to determine a type of the blade. Preferably the identification element comprises a plurality of through holes. Advantageously, the identification element of the blade allows detecting whether which blade type is inserted into the blade unit. Advantageously, the plurality of through holes may be positioned at predetermined positions on the blade forming a pattern similar to a bar code. Advantageously, the 2D image sensor or the light barrier's light sensor will, upon an appropriate scan of the blade unit through the light barrier, detect a "light ray on" (through hole at position) and "light ray off" (through hole not at position) pattern indicative of the blade type, such as a V-knife and a shaped or form-knife.

In an embodiment of the cable processing machine, the blade unit further comprises a second blade pair with an upper blade and a lower blade for processing the electrical cable. Advantageously, the second blade pair my contain a different blade type then the first blade pair, allowing different processing steps to be performed on the electrical cable by repositioning the blade unit in the X-direction.

According to another aspect, the invention provides a method for calibrating a blade unit of a cable processing machine, the method comprising: (i) fixing an upper blade with a blade holder to a blade arm of a blade unit of the cable processing machine; (ii) scanning the blade arm in a X-direction until a position determination unit detects a reference element for determining a X-reference position; (iii) scanning the blade arm in a Y-direction until the position determination unit detects the reference element for determining a Y-reference position; (iv) scanning the blade arm in the X-direction at a first Y-position and at a second Y-position such that the position determination unit detects the knife edges of the upper blade; and (v) comparing the determined zero-point with a calculated position based on a cable processing machine's stored home parameter and reference parameter. Advantageously, determining the X-positions of the interruption of the light barrier's light ray by the knife edges at two different Y-positions of the blade arm allows determining the 2D position of a V-blade, including the orientation / angles of the knife edges and the X,Y position of the "zero-point" where the two edges intersect relative to the position of the reference element. Advantageously, a comparison with a calculated position based of the cable operating machine's stored home parameter and reference parameter allows relating the determined zero-point position to the wireline. In case the comparison is within a predetermined quality range, the cable processing machine is properly calibrated. On the other hand, if the comparison is outside such a range, a central processing unit may provide an operator a warning signal.

In an embodiment, the method further comprises scanning the blade arm in the X-direction at a third Y-position such that the position determination unit detects the knife edge of the upper blade. Advantageously, a scan at the third Y-position determines the X-positions of the interruption of the light barrier's light ray by a shaped portion of a shaped- or form-knife. This allows determining the radius of the shaped portion of the form-knife.

According to another aspect, the invention provides an upgrade-kit for a cable processing machine, the upgrade-kit comprising a position determination unit (200, 300); an upper blade arm (130); and an upper blade holder (135); wherein the upper blade holder is arranged to accommodate an upper blade (111) of a first blade pair (110) to the upper blade arm; wherein either the upper blade arm (130) or the upper blade holder (135) comprises a first reference element (150) arranged to allow the position determination unit (200, 300) to determine a 2D reference position of the upper blade (111). Advantageously, the upgrade-kit allows exchanging in the field an existing blade arm and/or upper blade holder (without reference element) for a blade arm and/or blade holder comprising a reference element according to the invention. In combination with a position determination unit arranged to be assembleable on an existing or legacy cable processing machine, the latter is upgraded to allow performing an automatic calibration method according to the present invention.

In an embodiment, the upgrade kit further comprising a computer readable medium comprising software instruction for carrying out the method according to the invention.

Further advantages, features and details of the invention will be apparent from the following description, in which embodiments of the invention are described with reference to the drawings.

The list of reference signs as well as the technical content of the patent claims and figures are part of the disclosure. The figures are described coherently and comprehensively. Identical reference signs indicate identical components, reference signs with different indices indicate functionally identical or similar components. In the description and claims, terms such as "upper" and "lower", "first" and "second" are to be understood as nomenclature for distinguishing / readability purposes only. An "upper" element is not necessarily positioned vertically above a "lower" element. The "upper" element may in practice be positioned vertically below the "lower" element. The figures show:
- Fig. 1: a perspective view of an embodiment of a cable processing device according to the invention;
- Fig. 2: a side view of the cable processing device shown in Fig. 1;
- Fig. 3: a detail of the embodiment shown in Fig. 1 shematically depicting a blade comprising a reference element according to the invention;
- Fig. 4: a perspective view of an embodiment showing two blade pairs with their associated light barriers;
- Fig. 5: a front view of the embodiment showing two blade pairs with their associated light barriers;
- Fig. 6: a close-up of a blade pair with the upper and lower blades including identification elements;
- Fig. 7: a schematic drawing defining the calibration parameters of the calibration method according to the invention.

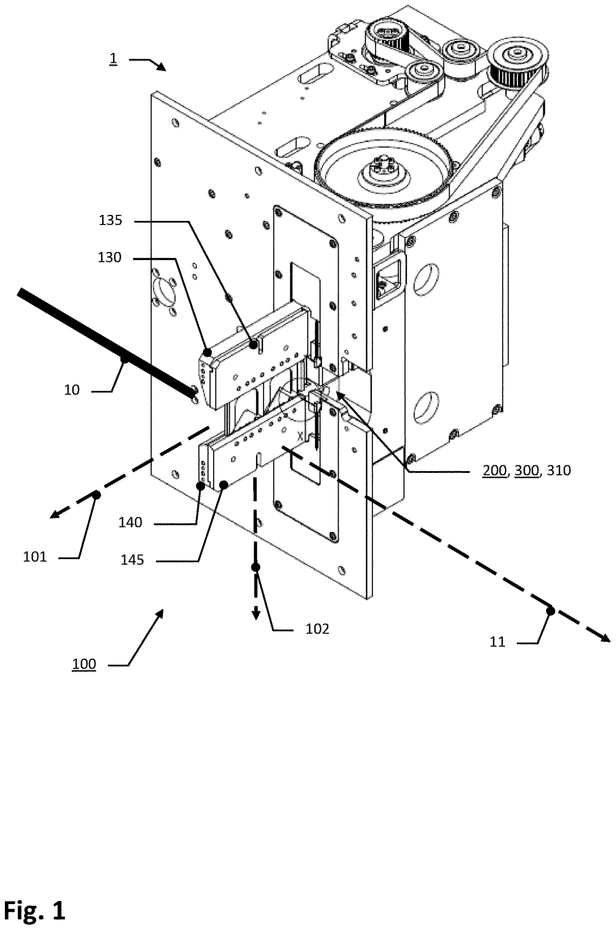

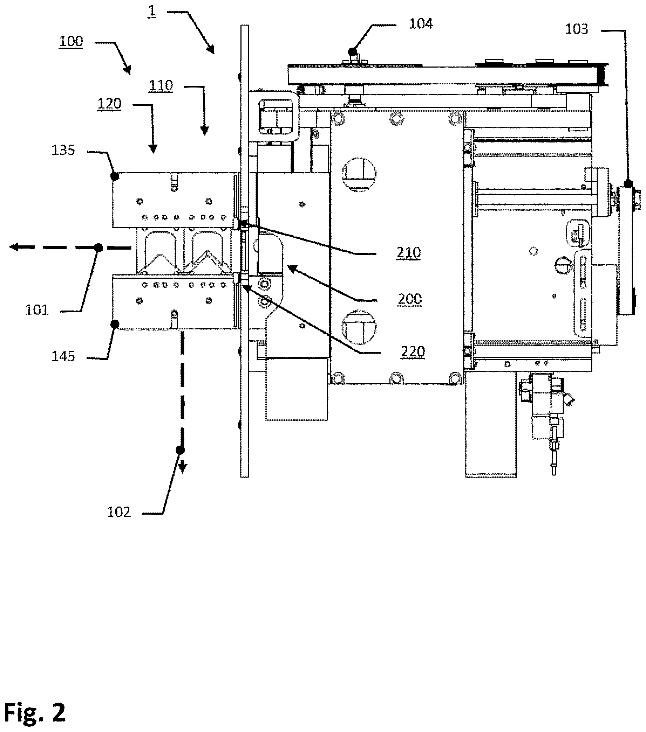

**Figs. 1** and **2** schematically show a perspective view and a side view of an example of a cable processing machine 1 according to the invention. The cable processing machine comprises a blade unit 100. The blade unit comprises an upper blade arm 130 and a lower blade arm 140. A first blade pair 110 and a second blade pair 120 may be positioned on the blade arms 130, 140. The first blade pair 110 comprises an upper blade 111 and a lower blade 112 for processing an electrical cable 10 fixedly held with its length axis along a Z-direction 11. Similarly, the second blade pair 120 comprises an upper blade 121 and a lower blade 122. The blades of the blade pairs may be positioned in an upper, respectively a lower blade holder 135, 145. These upper and lower blade holders may be exchangeably fixed to the respective blade arms. Alternatively, the blades of the blade pairs may be fixed directly to the blade arms. Alternative to two blade pairs, the cable processing machine may comprise only a single blade pair. Alternatively still, it may comprise more than two blade pairs (such as three pairs, or four, or even five).

The blade unit 100 is (re-)positionable in a X-direction 101 for changing over between the blade pairs as they are being positioned adjacent a cable end of the cable. For performing a cable processing operation, such as cutting or stripping, blade arms 130, 140 of blade unit 100 are (re-)positionable in a Y-direction 102 for opening and for closing the blades.

Cable processing machine 1 further comprises a position determination unit 200, 300. See circle in Fig. 1. In a first embodiment, position determination unit 200 comprising a first light barrier 210 associated with the upper blade arm 130, respectively upper blades 111, 121; and may furthermore comprise a second light barrier 220 associated with the lower blade arm 140, respectively lower blades 112, 122. Light barriers 210, 220 comprise a light source 211, 221 and a light receiver or sensor 212, 222. A light ray 213, 223 may be send from the respective light sources to the light sensors. The light source may be a laser emitting coherent light, or may be a diode emitting incoherent light. Moreover, the light may be visible, infra-red, or ultraviolet.

The blade unit 100 comprises a first reference element 150 arranged to allow the first light barrier 210 to determine a 2-D (reference) position of the upper blade 111 of the first pair 110, respectively the upper blade 121 of the second blade pair 120.

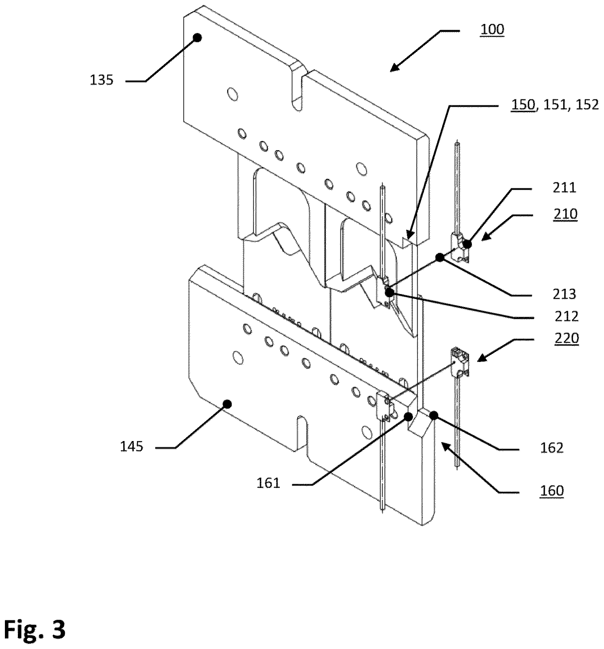

**Fig. 3** shows a detail of an embodiment of the blade unit 100, in particular it shows the features in the circle of Fig. 1 in more detail. Depicted are the upper blade holder 135 and the lower blade holder 145. The upper blades 111, 121 and the lower blades 112, 122 are positioned in the upper and lower blade holders, respectively. These holders may be fixated to the respective blade arms of blade unit 100. In an alternative embodiment, the upper and lower blades may be positioned directly on the upper and lower blades arms 130, 140, rather than through the use of an "intermediate" blade holder. Also depicted is an embodiment of position determination unit 200. In this embodiment position determination unit comprises a first light barrier 210 associated with upper blade holder 135. First light barrier 210 comprises a light source 211 and a light receiver or sensor 212, between which a light ray 213 is exchanged, respectively emitted and received. In an embodiment, position determination unit 200 may comprise a second light barrier 220 associated with lower blade holder 145. Second light barrier 220 comprises a light source 221 and a light receiver or sensor 222 for the exchange of a light ray 223.

In the embodiment depicted in **Fig. 3****,** the upper 135 and lower 145 blade holders comprise respective reference elements 150, 160 associated with the upper, respectively the lower blades. In an alternative embodiment, the blades are fixed directly to the blade arms, and reference elements 150, 160 may be comprised in the upper 130 and lower 140 blade arms. Upper and lower reference elements 150, 160 comprise a first reference edge 151, 161 and a second reference edge 152, 162. The first reference edges 151, 161 enable determining a reference position in a X-direction. The second reference edges 152, 162 determining a reference position in a Y-direction. Preferably the first reference edge and the second reference edge of the first, respectively the second reference element are arranged at 90° relative to each other. Advantageously, the first and second reference edges allow determining the (2D) reference position (X-direction and Y-direction) of the blade unit 100, respectively of the upper and lower blades by the position determination unit 200. Advantageously, by intercepting light, such as the light ray 213, 223 between light source 211, 221 and light sensor 212, 222 of light barriers 210, 220 upon repositioning the blade unit, the first and second reference edges allow determining the 2D reference position of the blade unit, respectively of the upper and lower blades. Preferably, the first and second light barriers are arranged such that their light rays are at right angles to the X-direction and Y-direction. This allows a particular accurate determination of the 2D reference position.

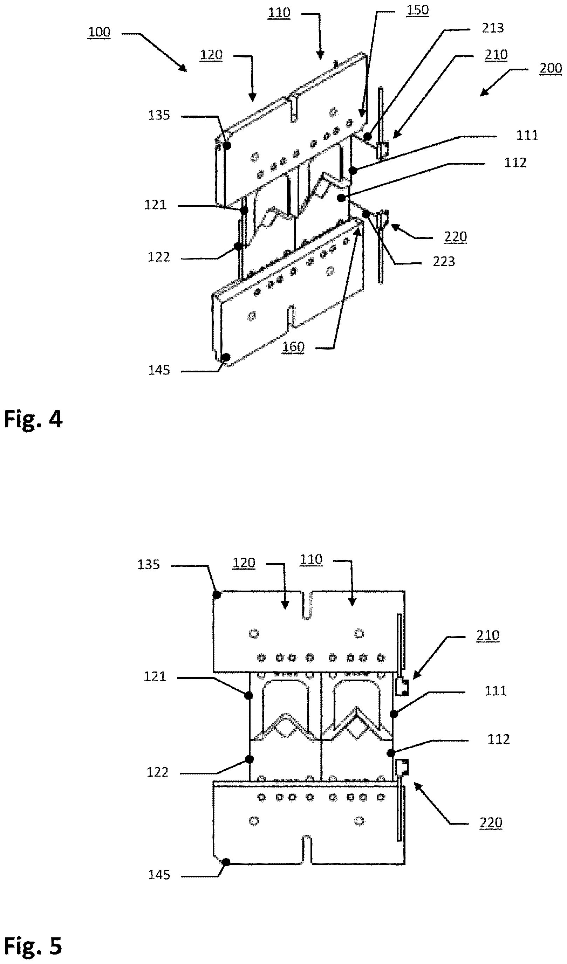

**Fig. 4** shows a perspective view of an embodiment showing two blade pairs 110, 120, each having upper blades 111, 121, and lower blades 112, 122. Similarly, **Fig. 5** shows a front view of the embodiment showing two blade pairs 110, 120. The upper blades and lower blades have their respective associated light barriers 210, 220. Upper blade holder 135 comprises reference element 150. Lower blade holder 145 comprises reference element 160. First blade pair 110 comprises V-knives arranged to cut or severe a cable for creating a cable end to be processed. Second blade pair 120 comprises shaped blades, including a central semi-circle cutting blade portion flanked by two bevel portions for centring the cable, arranged to cut-and-strip the insulation from the cable end to be processed.

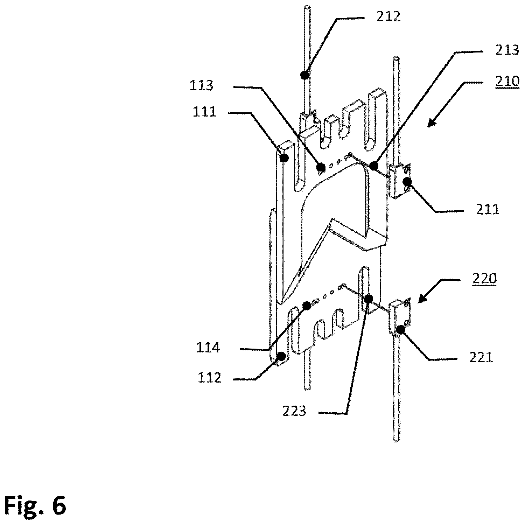

**Fig. 6** schematically shows a close-up of a blade pair 110 according to an embodiment of the invention. Blade pair 110 comprises upper 111 and lower 112 blades including respective identification elements 113, 114. These identification elements allow the associated position determination unit to determine a type of the blades. Preferably the identification element comprises a plurality of through holes. Advantageously, the identification element of the blade allows detecting whether a blade is fixed to the blade unit, and if so, which blade type is inserted into the blade unit. Advantageously, the plurality of through holes may be positioned at predetermined positions on the blade forming a pattern similar to a bar code. Advantageously, with the blade unit in its field of vision, a (2D) image sensor may detect (for instance using ambient light) a "light on" (through hole present) and "light off" (through hole not present) pattern indicative of the blade type, such as a V-knife and a shaped or form-knife. Similarly, in an alternative embodiment, the light barrier's light sensor may, upon an appropriate scan of the blade unit through the light barrier, detect a "light ray on" (through hole at position) and "light ray off" (through hole not at position) pattern indicative of the blade type.

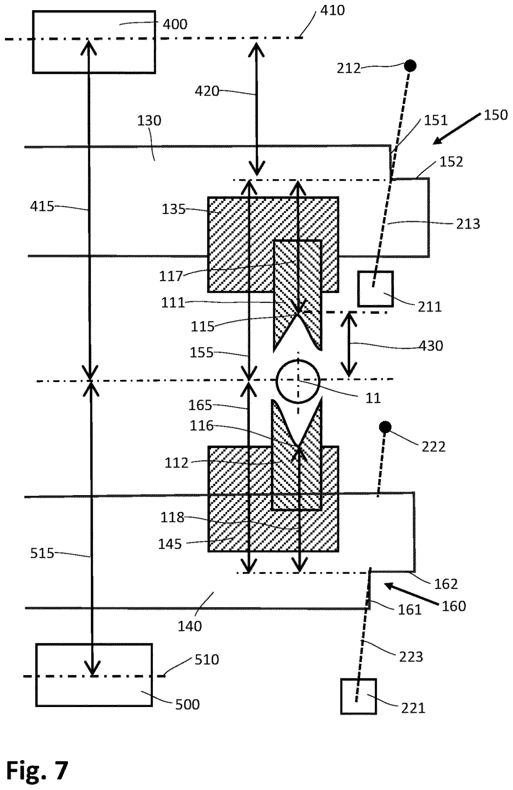

The invention furthermore provides a method for calibrating a blade unit 100 of a cable processing machine 1 on site in a cable manufacturing plant. As schematically shown in **Fig. 7****,** during manufacturing of the cable processing machine 1 itself at its production factory, the blade arms 130, 140 are positioned randomly relative to the cable's envisioned wireline along the Z direction 11, as the blade arm drives (for instance a spindle) have no defined orientation/position. Upon assembly of the cable processing machine 1, the cutting axis of blade unit 100 is manually adjusted to the wireline. To this end, a spindle is fixedly positioned on the cable processing machine. The spindle could be a single spindle with two counter-rotating threads for the upper 130, respectively lower arm 140 of blade unit 100. Alternatively, each arm could be associated with separate spindles. A first spindle nut to be associated with, for instance, the upper blade arm 130 is positioned at a specified distance from the wire line. Once positioned, the (upper) blade arm is attached to the nut and properly oriented in the X-direction. Subsequently, the second spindle nut, to be associated with the other (lower) blade arm, is turned to the same distance on the opposing side of the wireline. Again, once positioned the other/lower blade arm is attached to its nut and properly oriented in the X-direction. Alternatively, a blind/gauge may be positioned on the wireline extending symmetrically above and below. The upper and lower nuts may be positioned relative to this gauge. As a consequence, the blade arms are set (almost) symmetrically to the wireline. Typically, the adjustment accuracy is approximately 0.2 mm. Any deviation of exact symmetry is automatically adjusted during production of a cable at the production site of the cable manufacturing plant. For the flexibility of the (electrical) cable to be processed automatically centre itself between the closing blades of blade pair 110.

During manufacturing of the cable processing machine, or in case of replacement of a blade unit 100 on site in a cable manufacturing plant, the machine's *"home position"* is determined. To this end, the cable processing machine comprises one (when equipped with a single spindle with two counter-rotating threads) or two (when equipped with two separate spindles for the upper/lower blade arms) homing sensors 400, 500 fixedly positioned on the processing machine. The home position in the Y-direction is the position wherein the blade arms are completely open, and trigger their respective homing sensor 400, 500. The blade arms are in a completely closed position when a bottom edge of the upper blade arm 130 touches an upper edge of the lower blade arm 140. Alternatively, the upper and/or the lower blade arms may (each) have a protrusion (not shown in Fig. 7) oriented towards the other arm. Preferably, the protrusion(s) is/are located outside the cutting area of the blade unit. The completely closed position may alternatively be reached when both protrusions touch each other, or when one protrusion touches the other arm. Given the symmetrical adjustment step described above, the closed position of blade arms corresponds with the wireline. The distance between the completely open or home position and the completely closed position is defined by H_UY 415, H_LY 515 for the upper and lower blade arms.

Similarly, the distance H_X (for the upper blade arm and/or the lower blade arm) in the X-direction can be determined for controlling the positioning the appropriate blade pair when the cable processing machine comprises multiple blade pairs for different processing operations (not shown in Fig. 7). The machine specific home parameters (H_UX, H_UY) and (H_LX, H_LY) for the upper and the lower blade arm are stored in a central processing unit of the cable processing machine.

On site at the cable manufacturing plant, positioning (or exchanging) blade holders 135, 145, including one or more blade pairs 110, 120, on the blade arms results in a position inaccuracy of the blade position of typically 0.2 mm - 0.5 mm. A similar tolerance range is achieved when the blades pairs 110, 120 are mounted directly on the blade arms 130, 140, rather than through the use of an "intermediate" blade holder 135, 145. Given a defined stroke length of the knives provided in a machine's recipe and the insulation thickness of an electrical cable to be processed, these position in accuracies may result in either too deep a cut causing damage to the inner conductor or the strands of the shielding mesh, or may result in too shallow a cut causing the stripping of the insulation to fail.

In order to calibrate the blade unit 100 for the actual blade position in the unit, the invention implements a reference element 150, 160 in the blade unit and a position determination unit 200, 300. To this end, a machine specific reference parameter R is determined upon completion of machine assembly and stored in a central processing unit of the cable processing machine. Reference parameter R 155, 165 represents the distance between a position of the blade arms wherein they are completely closed, and a position of the blade arms wherein the reference element incorporated in the blade unit triggers the position determination unit 200, 300. Alternatively, reference parameter R may be defined to represent the distance between a position of the blade arms wherein they are completely open, and a position of the blade arms wherein the reference element incorporated in the blade unit triggers the position determination unit 200, 300. It is noted that the position determination unit 200, 300 has a fixed position on the cable processing machine. Advantageously, the blade unit 100 comprises a first reference element 150 associated with the upper blade arm 135, and optionally a second reference element 160 associated with the lower blade arm 145, and each reference element preferably has two references edges 151, 152, 161, 162 (for the X- and Y-direction). Upon scanning (for instance by repositioning) the blade arms 130, 140 in the Y-direction 102, the triggering of the position determination unit 200, 300 determines the parameters R_UY 155 and R_LY 165. Similar parameters may be determined for the X-direction 101. The determined parameters for the upper blade arm (R_UX, R_UY) and for the lower blade arm (R_LX, R_LY) are stored.

Once the type of cables to be produced in the cable manufacturing plant have been determined, appropriate blades or knives are mounted (with or without a blade holder) on the blade unit 100 for the envisioned cable processing operations. As mentioned previously, the blade mounting results in position intolerances. Moreover, the knives mounted may be inappropriate for the processing operation envisioned, *i*.*e*. may be of the wrong type. Alternatively, the knives mounted may be of insufficient quality. For instance, the knife edges may have defects, such as chippings, or may be contaminated. Alternatively still, the knives may be mounted erroneously, such as resulting in an erroneous orientation. In order to determine whether the knives are properly positioned within an acceptability range, the cable processing machine may perform a calibration method.

Prior to performing the calibration method per se, an initialisation procedure may be performed to check whether the calibration system according to the invention delivers consistent results. For at the cable manufacturing plant, a sensor may have been shifted, or it may be covered by dust particles or the like, or a sensor or a spindle may be defect, interfering with a correct operation. Thus, the operating personnel may perform the initialisation procedure. Alternatively, the cable processing machine may be programmed to perform such an initialisation procedure automatically, for instance after exchange of a blade holder. To this end, the blade unit is positioned in a standard position, for instance the home position. From this position, the blade unit is scanned over a distance S 420 until the reference element(s) 150, 160 trigger(s) the position determination unit 200, 300. The determined distance S may now be compared with the difference between the stored homing parameter H 415 and reference parameter R 155 (*i*.*e*. S should be H-R). A discrepancy between the stored and determined parameters may be attributable to the above-mentioned error sources. If the discrepancy is within a predetermined acceptability range, the initialisation procedure is finalized and a calibration procedure may be performed. If the discrepancy is outside that range, a warning signal may be provided to the operator.

Assuming the initialisation procedure has been successfully finalized, the calibration method according to the invention may be used to alleviate any of the non-quality situations, like knife zero-point position intolerances, incorrect knives or defect knife edges. To this end, the method for calibrating a blade unit 100 of a cable processing machine 1, comprises the steps:
▪ Fixing a blade to the blade unit 100 (for instance an upper blade 111 [with or without a blade holder 135] to a blade arm 130 of the blade unit 100);
▪ Optionally, bringing the blade unit to a home position of the cable processing machine;
▪ Scanning the blade unit in a X-direction until a position determination unit 200, 300 detects a reference element 150, 160 for determining a X-reference position;
▪ Scanning the blade unit in a Y-direction until the position determination unit 200, 300 detects the reference element 150, 160 for determining a Y-reference position;
▪ Scanning the blade unit in the X-direction at a first Y-position and at a second Y-position for determining the zero-point 115, 116 of the blade (note that the zero point can be determined once the position determination unit detects the knife edges of the (upper) blade at two different Y-positions, as from these detected positions the angle alpha between the knife's cutting edges can be extracted, respectively the radius of a form knife can be extracted);
▪ Comparing the determined zero-point with a calculated position based on a cable processing machine's stored home parameter H and reference parameter R.

Scanning, in the sense of the invention, is not only to be understood as a translational motion of the blade unit in the X- and/or Y-direction, for instance until the reference element triggers the light barrier 210,220. It should also be understood as a scan of an image taken by an image sensor 310, such as for instance a charge-coupled device (CCD), along a line corresponding with the X- respectively Y-direction.

Advantageously, the scanning allows determining the position of the blade's zero-point 115, 116 relative to the detected position of the reference element 150, 160. The distances ZP of the zero-points 115, 116 to their respective reference element 150, 160 are given by ZP_U 117 and ZP_L 118.

A comparison with a calculated position based of the cable operating machine's stored home parameter and reference parameter allows relating the determined zero-point position to the wireline. Considering for simplicity only the Y-direction, the determined distance of the blade's zero-point to the wire line D 430 is given by: D = H - S - ZP. In case the comparison is within a predetermined quality range, the cable processing machine is properly calibrated. If the blade's zero-point is "at" the predefined location, the knife stroke length defined in the recipe may be applied for cable processing operation. If the blade's zero-point is "close to" the predefined location, the knife stroke length may be adjusted appropriately to reach the proper cutting depth. On the other hand, if the comparison is outside the predefined quality range, a central processing unit may provide an operator a warning signal.

Advantageously, the invention allows to easily exchange a blade holder including the blades from one cable processing machine to the next, as with the quasi-automated calibration method according to the invention, the machine down-time for adjusting and orienting the blades to the wireline of the receiving cable processing machine is reduced to a minimum.

As will be clear to the person skilled in the art, the embodiments and methods shown in the figures or described herein may also be combined and interchanged within the concept of the invention.

As an example, instead of a light source and light sensor combination, the position determination unit 300 may simply comprise an image sensor. Thus, according to another aspect, the invention provides a cable processing machine 1, for processing an electrical cable 10, comprising (i) blade unit 100 comprising a first blade pair 110 with an upper blade 111 and a lower blade 112 for processing the electrical cable; and (ii) a position determination unit 300, for instance associated with the blade unit or with the upper blade 111. The blade unit 100 comprises a first reference element 150 arranged to allow the position determination unit 300 to determine a reference position of the upper blade 111, for instance a two-dimensional (2D) reference position. Advantageously, position determination unit 300 comprises an image sensor 310. Preferably, the image sensor is a 1D or 2D image sensor, such as a such charge-coupled device (CCD-camera). Advantageously, the one-dimensional (1D) or two-dimensional (2D) pixel array of image sensor 310 (for instance a CCD-camera) allows capturing a vision field including the first reference element and the upper blade. The position (and orientation) of the upper blade relative to the reference element can be directly determined from the measured data by the pixel array. Moreover, in this embodiment, the image sensor may operate in combination with ambient light present at the location of the cable processing machine. This avoids the necessity of incorporating a dedicated light source - as is the case with the light barrier embodiment.

Moreover, an embodiment of cable processing machine 1 comprising position determination unit 300 (in the form of a 2D image sensor) in combination with a blade pair in which the blades comprise identification elements 113, 114 allows to determine if blades are present in the cable processing machine. If not, for instance through detecting the absence of any identification element, a central processing unit of the cable processing machine may provide a warning signal to an operator. Moreover, if blades are present, the blade type may be determined using identification element 113, 114. For the position determination unit will detect (ambient) light passing through the through holes of the identification element. Again, in case a blade type has been determined erroneous for a planned operation, the central processing unit may provide a warning signal to an operator.

According to yet another aspect the invention provides a blade 111, 112, 121, 122 for processing an electrical cable 1, the blade comprising an identification element 113, 114 for allowing to determine a blade type. An example of a blade type is a V-knife, allowing to cut or severe a cable for creating a cable end to be processed. A further example of a blade type is a shaped- or form-knife, optionally including a central semi-circle cutting blade portion having a radius consistent with the diameter of the cable to be processed, and optionally including two flanking bevel portions for centring the cable, allowing to cut-and-strip the insulation from the cable end to be processed. Advantageously, the identification element allows a sensor to determine a type of the blade. Advantageously, the identification element of the blade allows detecting which blade type is inserted into the blade unit. In an embodiment, the identification element comprises a plurality of through holes allowing a sensor to detect light passing through these holes. In another embodiment, the identification element comprises a plurality of optically active parts. As an example of being optically active, the parts may adsorb or scatter light so that a sensor (such as a camera) viewing the identification element determines the parts as being darker than their immediate surroundings. As another example of being optically active, the parts may concentrate light so that a sensor viewing the identification element determines the parts as being lighter than their immediate surroundings. For instance, the parts may be dimples, or may be pimples. The parts may be half spheres, round, elongated, or linear. The invention thus, further provides a blade unit comprising a blade according to this aspect of the invention. Moreover, the invention provides a cable processing machine comprising a blade according to this aspect of the invention. According to yet another aspect, the invention provides a method for determining the quality of assembled blades 110,120 in a blade unit 100 of a cable processing machine 1, the method comprising the steps:
▪ Fixing a blade to the blade unit 100 (for instance an upper blade 111 [with or without a blade holder 135] to a blade arm 130 of the blade unit 100);
▪ Scanning the blade unit in an X-direction at a first Y-position until the position determination unit 200, 300 detects the knife edges of the blade;
▪ Scanning the blade unit in the X-direction at a second Y-position until the position determination unit detects the knife edges of the blade;
▪ Calculating from the determined knife edge positions a geometrical form factor of the blade (such as angle alpha between the knife edges of a V-knife, or the radius R of a form-knife);
▪ Scanning the blade unit in the X-direction at a third Y-position until the position determination unit 200, 300 detects the knife edges of the blade;
▪ Comparing the determined position of the knife edges at the third Y-position with a calculated position based on the determined geometrical form factor.

Advantageously, a difference between the determined position at the third Y-position and the calculated position allows determining the quality of the blade assembled. For instance, in case the blade has been chipped or worn-down as a consequence of extended use, a distance between the two determined positions of the knife edges will be larger than the calculated distance. The quality of a cut upon processing the cable with such a blade may be negatively influenced. As another example, dirt particles may have attached to the knife edges, negatively influencing the quality of a cut upon processing a cable with that blade. A distance between the two determined positions of the knife edges and the calculated distance will be smaller due to the presence of such dirt particles. Upon determining a difference, a central processing unit of the cable processing machine may provide a warning signal to an operator for removing / exchanging / cleaning non-quality blades.

### List of reference signs

- 1: Cable processing machine
- 10: Cable
- 11: Z-axis
- 100: Blade unit
- 101: X-axis
- 102: Y-axis
- 103: X-Drive
- 104: Y-Drive
- 110: First blade pair, V-knives
- 111: Upper blade of first blade pair
- 112: Lower blade of first blade pair
- 113: Identification element upper blade
- 114: Identification element lower blade
- 115: Zero-point Upper blade
- 116: Zero-point Lower blade
- 117: Distance Zero-point Upper blade to second reference edge upper reference element
- 118: Distance Zero-point lower blade to second reference edge lower reference element
- 120: Second blade pair, shaped- or form-knives
- 121: Upper blade of second blade pair
- 122: Lower blade of second blade pair
- 130: Upper blade arm
- 131: Upper blade arm drive
- 135: Upper blade holder
- 140: Lower blade arm
- 141: Lower blade arm drive
- 145: Lower blade holder
- 150: (Upper) Reference element associated with the upper blades
- 151: First reference edge of the upper reference element
- 152: Second reference edge of the upper reference element
- 155: Distance R_UY in Y-direction between closed position blade arms and Second reference edge upper reference element upon triggering
- 160: (Lower) Reference element associated with the lower blades
- 161: First reference edge of the lower reference element
- 162: Second reference edge of the lower reference element
- 165: Distance R_LY in Y-direction between closed position blade arms and Second reference edge lower reference element upon triggering
- 200: Position determination unit
- 210: First light barrier
- 211: Light source of the first light barrier
- 212: Light sensor of the first light barrier
- 213: Light ray between light source and light sensor
- 220: Second light barrier
- 221: Light source of the second light barrier
- 222: Light sensor of the second light barrier
- 223: Light ray between light source and light sensor
- 300: Position determination unit
- 310: (2D) Image sensor
- 400: Homing sensor upper blade arm
- 410: Open position (Y-direction) upper blade arm triggering homing sensor
- 415: Distance H_UY in Y-direction between Home position and closed position blade arms
- 420: Distance S_Y in Y-direction between Home position and second reference edge upper reference element
- 430: Distance D_Y in Y direction between wire line and blade zero-point
- 500: (Optional) Homing sensor lower blade arm
- 510: (Optional) Open position (Y-direction) lower blade arm triggering homing sensor
- 515: Distance H_LY in Y-direction between Home position and closed position blade arms

## Claims

1. A cable processing machine (1), for processing an electrical cable (10), comprising:
A blade unit (100) comprising a first blade pair (110) with an upper blade (111) and a lower blade (112) for processing the electrical cable; and
A position determination unit (200, 300);
Wherein the blade unit (100) comprises a first reference element (150) arranged to allow the position determination unit (200, 300) to determine a reference position of the upper blade (111).

2. A cable processing machine (1) according to claim 1, wherein the position determination unit (200) comprises a first light barrier (210) associated with the upper blade (111), and the first reference element (150) is arranged to allow the first light barrier (210) to determine the reference position of the upper blade (111).

3. A cable processing machine (1) according to claim 1, wherein the blade unit (100) comprises a second reference element (160) arranged to allow the position determination unit (200, 300) to determine a 2D reference position of the lower blade (112).

4. A cable processing machine (1) according to claim 3, wherein the position determination unit (200) comprises a second light barrier (220) associated with the lower blade (112), and the second reference element (160) is arranged to allow the second light barrier (220) to determine a 2D reference position of the lower blade (112).

5. A cable processing machine (1) according to claim 1 or 3, wherein the first respectively the second reference element (150, 160) comprises a first reference edge (151, 161) for determining a reference position in a X-direction, and a second reference edge (152, 162) for determining a reference position in a Y-direction, preferably the first reference edge and the second reference edge are arranged at 90° relative to each other.

6. A cable processing machine (1) according to claims 1 to 5, wherein the blade unit (100) comprises an upper blade arm (130), wherein the upper blade (111) is fixed on the blade arm and the first reference element (150) is arranged on the upper blade arm, or wherein the upper blade is positioned in an upper blade holder (135) and the first reference element (150) is arranged either on the upper blade arm or on the upper blade holder.

7. A cable processing machine (1) according to claim 2 or 4, wherein the first light barrier (210), respectively the second light barrier (220) have a light source (211, 221) and a light sensor (212, 222).

8. A cable processing machine (1) according to claim 7, wherein the light source (211) of the first light barrier (210) is positioned opposite a front side of the associated upper blade (111), and the light sensor (212) of the first light barrier (210) is positioned opposite a back side of the associated upper blade (111).

9. A cable processing machine (1) according to claim 7, wherein the light source and the light sensor of the first light barrier are positioned opposite a front side of the associated upper blade, and wherein the first light barrier further comprises a reflecting element, wherein the reflecting element is positioned opposite a back side of the associated upper blade.

10. A cable processing machine (1) according to claim 1, wherein the position determination unit (300) comprises an image sensor (310).

11. A cable processing machine (1) according to any of the claims 1 to 10,
wherein the upper blade (111) or the lower blade (112) comprises an identification element (113, 114) for allowing the associated position determination unit (200, 300) to determine a type of the blade, preferably the identification element comprises a plurality of through holes.

12. A method for calibrating a blade unit (100) of a cable processing machine (1), the method comprising:
▪ Fixing an upper blade (111) with a blade holder (135) to a blade arm (130) of a blade unit (100) of the cable processing machine (1);
▪ Scanning the blade arm in a X-direction until a position determination unit (200) detects a reference element (150) for determining a X-reference position;
▪ Scanning the blade arm in a Y-direction until the position determination unit (200) detects the reference element (150) for determining a Y-reference position;
▪ Scanning the blade arm in the X-direction at a first Y-position and at a second Y-position for determining the zero-point of the upper blade;
▪ Comparing the determined zero-point with a calculated position based on a cable processing machine's stored home parameter and reference parameter.

13. The method according to claim 12, wherein the method further comprises scanning the blade arm in the X-direction at a third Y-position such that the position determination unit detects the knife edge of the upper blade.

14. An upgrade-kit for a cable processing machine (1), the upgrade-kit comprising a position determination unit (200, 300); an upper blade arm (130); and an upper blade holder (135); wherein the upper blade holder is arranged to accommodate an upper blade (111) of a first blade pair (110) to the upper blade arm; wherein either the upper blade arm (130) or the upper blade holder (135) comprises a first reference element (150) arranged to allow the position determination unit (200, 300) to determine a 2D reference position of the upper blade (111).

15. The upgrade kit according to claim 14, further comprising a computer readable medium comprising software instruction for carrying out the method according to any of the claims 12 to 13.
